# FASCICULE DE BREVET EUROPEEN

(11) **EP 1 631 445 B1**
(45) Date de publication et mention de la délivrance du brevet: **11.08.2010**
(21) Numéro de dépôt: 04767317.3
(22) Date de dépôt: 10.06.2004
(51) Int. Cl.: B29D 11/00, B29C 31/06

(54) **VANNE ET DISPOSITIF D'ALIMENTATION CONVENANT AU REMPLISSAGE, AVEC UNE MATIERE POLYMERISABLE, D'UNE CAVITE DE MOULAGE**
VENTIL UND ZUFUHRVORRICHTUNG ZUM FÜLLEN EINES FORMHOHLRAUMS MIT EINEM POLYMERISIERBAREN MATERIAL
VALVE AND SUPPLYING DEVICE FOR FILLING A MOULDING CAVITY WITH A POLYMERISABLE MATERIAL

(30) Priorité: 11.06.2003 FR 0306990
(43) Date de publication de la demande: 08.03.2006
(73) Titulaire: ESSILOR INTERNATIONAL (Compagnie Générale d'Optique), F-94220 Charenton-le-Pont (FR)
(72) Inventeur: FRESON, David, F-80200 Estrees-Deniecourt (FR); CAILLOUX, Jean-François, F-77600 Bussy Saint Georges (FR)
(74) Mandataire: Lepelletier-Beaufond, François
(86) Numéro de dépôt international: PCT/FR2004/001452
(87) Numéro de publication internationale: WO 2004/110732

(56) Documents cités:
- EP-A- 0 473 546
- FR-A- 2 792 243
- US-A- 4 374 531
- US-A1- 2002 185 865

## Description

L'invention a trait, d'une manière générale, aux dispositifs d'alimentation convenant au remplissage, avec une matière polymérisable, d'une cavité de moulage d'une lentille optique, en particulier une lentille ophtalmique.

On connaît déjà par la demande de brevet français 2 792 243, à laquelle correspond le brevet américain 5,378,138, une vanne pour un tel dispositif d'alimentation, laquelle vanne comporte un canal débouchant à une extrémité par un orifice d'éjection tandis qu'il présente latéralement un orifice d'entrée et un orifice de sortie propres respectivement à l'arrivée et à l'évacuation de la matière de moulage, cette vanne comportant également un tiroir qui est monté mobile en translation dans le canal. Dans une position de repos du tiroir, l'orifice d'entrée et l'orifice de sortie sont en communication tandis que l'orifice d'éjection est isolé tant de l'orifice d'entrée que de l'orifice de sortie. Dans une position de travail du tiroir, dans laquelle la cavité de moulage est alimentée, l'orifice d'entrée est en communication avec l'orifice d'éjection tandis que l'orifice de sortie est isolé de l'orifice d'entrée et de l'orifice d'éjection.

Quand le tiroir est en position de repos, la matière de moulage qui arrive à la vanne continue à circuler, en étant évacuée de la vanne par l'orifice de sortie, au lieu de stagner dans la vanne, pour éviter le dépôt d'une pellicule de matière au sein de la vanne (phénomène connu sous le nom de "gommage"), et pour éviter également la formation spontanée de bulles (phénomène connu sous le nom de "bullage").

L'invention vise à améliorer une telle vanne, et plus généralement le dispositif d'alimentation de la cavité de moulage dont fait partie cette vanne.

Elle propose à cet effet une vanne convenant au remplissage, avec une matière polymérisable, d'une cavité de moulage d'une lentille optique, en particulier une lentille ophtalmique, laquelle vanne comporte un orifice d'entrée de matière, un orifice de sortie de matière et un orifice d'éjection de matière dans ladite cavité ainsi qu'un distributeur pour mettre en communication ou isoler les uns des autres l'orifice d'entrée de matière, l'orifice de sortie de matière et l'orifice d'éjection ; vanne **caractérisée en ce que** :
- elle comporte une chambre de dosage connectée audit distributeur, un piston mobile dont la position fixe le volume de ladite chambre de dosage, un organe de pilotage de la position dudit piston mobile et un organe de pilotage de la position dudit distributeur ;
- l'orifice d'entrée et l'orifice de sortie sont en communication permanente ; et
   ledit distributeur présente une première position dans laquelle ledit orifice d'entrée de matière et ledit orifice de sortie de matière sont en communication avec ladite chambre de dosage tandis que ledit orifice d'éjection est isolé tant dudit orifice d'entrée de matière et dudit orifice de sortie de matière que de la chambre de dosage, et présente une deuxième position dans laquelle ledit orifice d'entrée de matière et ledit orifice de sortie de matière sont isolés tant de la chambre de dosage que de l'orifice d'éjection tandis que la chambre de dosage et l'orifice d'éjection sont en communication l'un avec l'autre.

Dans la première position du distributeur, la chambre de dosage est en communication avec l'orifice d'entrée de matière et avec l'orifice de sortie de matière entre lesquels il est prévu une circulation de matière de moulage polymérisable.

Si l'on fait alors varier la position du piston mobile dans le sens où le volume de chambre de dosage s'agrandit, celle-ci se remplit de matière polymérisable, le transfert entre la zone de circulation de cette matière et la chambre de dosage s'effectuant exclusivement à l'intérieur de la vanne. L'orifice d'éjection étant isolé, il n'y a aucune décharge de matière polymérisable par cet orifice.

Dans la deuxième position du distributeur, l'orifice d'entrée et l'orifice de sortie sont reliés exclusivement l'un à l'autre tandis la chambre de dosage et l'orifice d'éjection sont reliés exclusivement l'un à l'autre.

Si la chambre de dosage et la liaison entre celle-ci et l'orifice d'éjection sont alors remplies de matière polymérisable, le déplacement du piston mobile dans le sens où le volume de la chambre de dosage diminue a pour effet de provoquer le déversement, par l'orifice d'éjection, d'une quantité de matière polymérisable dont le volume est exactement égal à la variation de volume de la chambre de dosage.

On voit que la vanne selon l'invention permet un découplage entre la circulation de la matière polymérisable à l'intérieur de la vanne et le déversement de cette matière par l'orifice d'éjection.

Il possible d'effectuer, grâce à ce découplage, le déversement de la matière polymérisable par l'orifice d'éjection dans des conditions de débit et de volume qui peuvent être fixées avec une grande précision, en l'occurrence par l'amplitude et la vitesse de déplacement du piston mobile.

Il est en outre possible de maintenir en permanence la circulation de la matière polymérisable, y compris lors du remplissage de la chambre de dosage, à partir du moment où la vitesse d'agrandissement de volume de cette chambre reste inférieure au débit de circulation de la matière dans le circuit de source, ce qui est favorable à la prévention des phénomènes de gommage et de bullage dans le circuit de source.

Pour ce qui est de la vanne proprement dite, ces mêmes phénomènes sont évitables par le choix d'une valeur appropriée pour le débit et, comme on le verra ci-après, grâce à une régulation en température.

Selon des caractéristiques préférées de la vanne selon l'invention, ledit distributeur présente une troisième position dans laquelle ledit orifice d'entrée de matière, ledit orifice de sortie de matière, la chambre de dosage et l'orifice d'éjection sont tous en communication les uns avec les autres.

Cette position offre l'avantage de permettre d'effectuer une purge au moins partielle de la vanne, en particulier de sa portion située entre l'orifice d'entrée de matière et l'orifice d'éjection de matière.

De préférence, ladite troisième position est une position intermédiaire que prend ledit distributeur lorsqu'il passe de la première position à la deuxième position et inversement.

Ainsi, il y a une purge partielle de la vanne qui s'effectue à chaque passage de la première à la troisième position et à chaque passage de la troisième position à la première position.

Selon des caractéristiques préférées pour des raisons de simplicité et de commodité de la vanne :
- elle comporte un premier canal dont une première extrémité forme ledit orifice d'entrée et dont une deuxième extrémité forme ledit orifice de sortie, un deuxième canal débouchant à une première extrémité par ledit orifice d'éjection tandis qu'à une deuxième extrémité ledit deuxième canal est en communication avec ledit premier canal, un troisième canal dont une première extrémité débouche dans ledit deuxième canal et dont une deuxième extrémité débouche dans ladite chambre de dosage à une extrémité opposée audit piston, et un doigt de dispense mobile à coulissement dans ledit deuxième canal ; et éventuellement
- ledit doigt est adapté à coopérer avec la paroi latérale dudit deuxième canal pour admettre une première position dans laquelle il est en butée contre un siège en isolant ledit troisième canal d'une première portion dudit deuxième canal située entre ledit siège et ledit orifice d'éjection tandis qu'il laisse ledit troisième canal communiquer avec ledit premier canal par l'intermédiaire d'une deuxième portion dudit deuxième canal et pour admettre une deuxième position dans laquelle il isole ledit troisième canal de ladite deuxième portion du deuxième canal tandis qu'il laisse ledit troisième canal communiquer avec ladite première portion du deuxième canal.

Selon d'autres caractéristiques préférées pour les mêmes raisons :
- ledit organe de pilotage du distributeur est pneumatique ; et éventuellement
- ledit organe de pilotage dudit distributeur comporte une tige présentant à une première extrémité un doigt de dispense et présentant à une deuxième extrémité un piston faisant partie d'un vérin pneumatique ; et éventuellement
- ladite vanne comporte un organe de butée à position réglable pour ledit piston.

Selon encore d'autres caractéristiques préférées, pour les mêmes raisons :
- ledit organe de pilotage de la position dudit piston mobile dans la chambre de dosage comporte un ensemble électromécanique pas-à-pas ; et éventuellement
   ladite vanne comporte une tige passant au travers dudit ensemble électromécanique pas-à-pas à laquelle est fixée, à une première extrémité, ledit piston mobile ; et éventuellement
- ladite vanne comporte au moins un capteur de la position de ladite tige ; et éventuellement
- ladite vanne comporte deux capteurs de position de ladite tige, respectivement un capteur de détection d'une fin de course où ledit piston mobile délimite un volume maximum pour ladite chambre de dosage et une deuxième position de fin de course où ledit piston mobile délimite un volume minimum pour ladite chambre de dosage.

Selon encore d'autres caractéristiques préférées, comme étant favorables à l'apparition de défauts dus aux effets de gommage ou aux effets de sirop, la vanne comporte des canaux de circulation de liquide de régulation thermique.

L'invention vise également, sous un deuxième aspect, un dispositif d'alimentation convenant au remplissage, avec une matière polymérisable, d'une cavité de moulage d'une lentille optique, en particulier une lentille ophtalmique, comportant une vanne selon l'invention, une unité de commande de l'organe de pilotage du distributeur et de l'organe de pilotage du piston mobile, ainsi qu'une source de matière polymérisable comportant un réservoir de matière polymérisable et une pompe de circulation continue, l'orifice d'entrée de matière de la vanne étant relié à l'orifice de refoulement de la pompe, l'orifice de sortie de matière de la vanne étant relié à l'orifice de retour du réservoir tandis que l'orifice de départ du réservoir est relié à l'orifice d'aspiration de la pompe.

Selon des caractéristiques préférées, en raison de la qualité des résultats obtenus, ladite unité de commande est adaptée, à partir d'une position de repos de ladite vanne dans laquelle ledit distributeur est dans ladite première position et dans laquelle ladite chambre de dosage présente un volume prédéterminé et est rempli en matière polymérisable :
- à agir sur ledit organe de pilotage du distributeur pour le faire passer dans ladite deuxième position ; puis
- à agir sur ledit organe de pilotage de la position dudit piston mobile pour déplacer ledit piston d'une distance prédéterminée dans le sens de la diminution du volume de ladite chambre de dosage ; puis
- à agir sur ledit organe de pilotage du distributeur pour le faire passer dans ladite première position ; puis
- à agir sur ledit organe de pilotage de la position dudit piston mobile pour déplacer celui-ci dans le sens de l'augmentation de volume de ladite chambre de dosage jusqu'à faire prendre à cette chambre ledit volume prédéterminé.

De préférence, pour des questions de simplicité et de commodité de mise en oeuvre, ledit volume prédéterminé que présente ladite chambre de dosage dans ladite position de repos est son volume maximum.

L'exposé de l'invention sera maintenant poursuivi par la description d'un exemple de réalisation, donnée ci-après à titre illustratif et non limitatif, en référence aux dessins annexés. Sur ceux-ci :
- la figure 1 est une vue schématique montrant un dispositif d'alimentation conforme à l'invention et la cavité de moulage à remplir ;
- la figure 2 montre, en agrandissement, la cavité de moulage remplie ;
- la figure 3 est une vue en élévation-coupe de la vanne montrée schématiquement sur la figure 1 ; et
- les figures 4 à 7 sont des vues similaires à la figure 2, montrant des positions successives de fonctionnement de cette vanne.

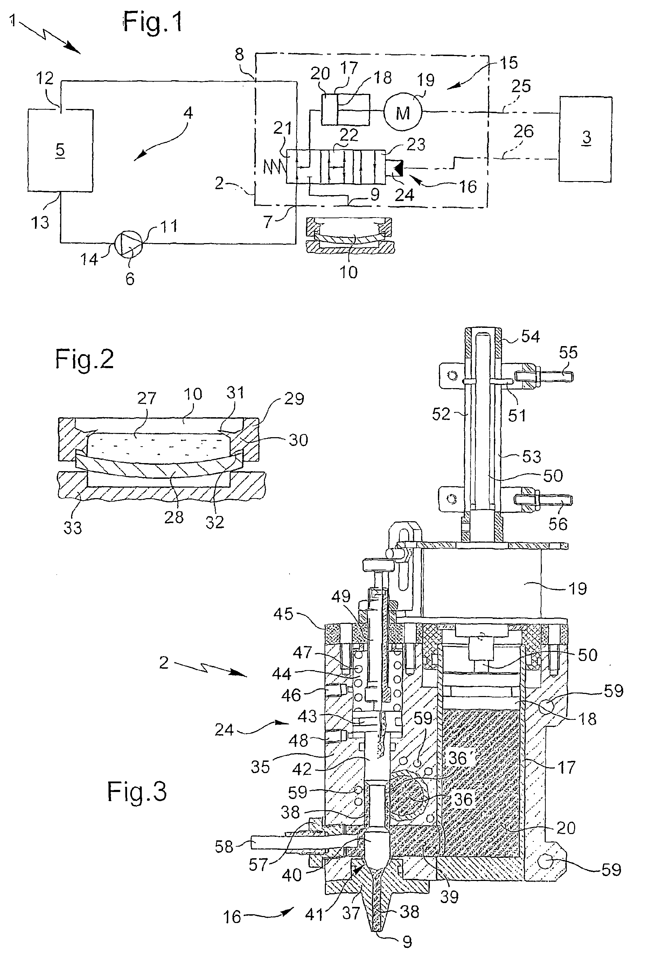

Le dispositif d'alimentation 1 représenté sur la figure 1 comporte une vanne 2, une unité de commande 3 et une source de matière polymérisable 4 comportant un réservoir 5 de matière polymérisable et une pompe 6 de circulation continue de la matière polymérisable.

La vanne 2 présente une orifice 7 d'entrée de matière polymérisable, un orifice 8 de sortie de matière polymérisable et un orifice 9 d'éjection de matière polymérisable dans la cavité de moulage 10.

L'orifice 7 est relié par une canalisation à l'orifice de refoulement 11 de la pompe 6, l'orifice 8 est relié par une canalisation à l'orifice 12 de retour du réservoir 5 tandis que l'orifice de départ 13 du réservoir 5 est relié à l'orifice d'aspiration 14 de la pompe 6.

La vanne 2 comporte un vérin doseur 15 et un distributeur 16.

Le vérin doseur 15 comporte un cylindre 17, un piston 18 mobile dans le cylindre 17 et un organe 19 de pilotage de la position du piston 18.

Le cylindre 17 et le piston 18 délimitent conjointement une chambre de dosage 20 dont le volume est fixé par la position du piston 18 dans le cylindre 17.

Le distributeur 16 comporte un tiroir capable d'adopter trois positions 21, 22 et 23, ainsi qu'un organe 24 de pilotage de la position prise par le distributeur, et plus précisément par le tiroir de celui-ci.

Le distributeur 16 est relié aux orifices 7, 8 et 9 ainsi qu'à la chambre de dosage 20. Les organes de pilotage 19 et 24 respectivement du vérin doseur 15 et du distributeur 16 sont connectés à l'unité de commande 3, ici respectivement par une conduite électrique 25 (l'organe 19 comporte un moteur électrique pas-à-pas) et par une conduite pneumatique 26 (l'organe de pilotage 24 comporte un vérin pneumatique simple effet).

Sur la figure 1, le distributeur 16 est dans la position 21, qui est sa position de repos. Dans cette position, les orifices 7 et 8 ainsi que la chambre de dosage 20 sont en communication les uns avec les autres tandis que l'orifice 9 est isolé de l'orifice 7, de l'orifice 8 et de la chambre 20.

Dans la position 23, qui est la position de travail du distributeur 16, les orifices 7 et 8 sont en communication entre eux et isolés tant de la chambre de dosage 20 que de l'orifice 9 alors que la chambre de dosage 20 et l'orifice 9 communiquent entre eux.

Dans la position 22, qui est une position intermédiaire, l'orifice 7, l'orifice 8, l'orifice 9 et la chambre 20 sont tous connectés les uns aux autres.

On observera que dans chacune des positions 21, 22 et 23 du distributeur 16, l'orifice d'entrée 7 et l'orifice de sortie 8 sont en communication. Plus généralement, dans la vanne 2, les orifices 7 et 8 sont en communication permanente de sorte que le liquide polymérisable, mis en circulation continue par la pompe 6, peut en permanence circuler de l'orifice 7 vers l'orifice 8.

On va maintenant expliquer le fonctionnement du dispositif d'alimentation 1.

Au repos, le distributeur 16 est dans la position 21 et la chambre de dosage 20 présente son volume maximal et est remplie de matière de moulage polymérisable.

Pour déverser dans la cavité de moulage 10 un volume prédéterminé de matière polymérisable, l'unité de commande 3 agit sur l'organe 24 afin de placer le distributeur 16 dans la position 23, de sorte que la chambre 20 est mise en communication avec l'orifice 9 tandis que la chambre 20 et l'orifice 9 sont isolés des orifices 7 et 8.

L'unité de commande 3 agit alors sur l'organe de pilotage 19 pour déplacer le piston 18 dans le sens de la diminution du volume de la chambre 20, de sorte que de la matière polymérisable est éjectée par l'orifice 9 et vient remplir la cavité 10, laquelle se présente, comme on le verra plus en détail ci-après, sous la forme d'une cuvette disposée sous l'orifice 9.

Lorsque le piston 18 s'est déplacé de la distance voulue, c'est-à-dire lorsque la quantité voulue de matière polymérisable a été déversée dans la cuvette 10, l'unité de commande 3 agit sur l'organe 19 pour faire cesser le déplacement du piston 18 puis agit sur l'organe 24 pour faire passer le distributeur 16 dans la position 21. On est alors dans la configuration illustrée sur la figure 1.

L'unité 3 agit ensuite sur l'organe 19 pour déplacer le piston 18 dans le sens de l'augmentation du volume de la chambre 20, jusqu'à ce que cette chambre prenne son volume maximal.

L'on est alors revenu à la position de repos initiale.

La vitesse de déplacement du piston 18 dans le sens de l'augmentation du volume de la chambre 20 est choisie pour que la vitesse de la variation de volume de cette chambre reste inférieure ou égale au débit de refoulement de la pompe 6 afin que le remplissage de la chambre 20 s'effectue dans les meilleures conditions.

Lors du passage du distributeur 16 de la position de repos 21 à la position de travail 23, ce distributeur se trouve un court instant dans la position intermédiaire 22. Dans cette position, l'orifice 9 est en communication notamment avec l'orifice 7. Cela a pour effet de provoquer un petit déversement de matière polymérisable, par exemple de l'ordre de quelques gouttes, par l'orifice 9.

Bien entendu, ce qui vient d'être dit pour le passage de la position 21 à la position 23 vaut également pour le passage de la position 23 à la position 21.

Le déversement d'un petit volume de matière polymérisable se produisant dans la position intermédiaire 22 offre l'avantage de permettre une purge partielle du circuit interne à la vanne 2 située entre les orifices 7 et 9.

On va maintenant décrire plus en détail la cavité de moulage 10, à l'appui de la figure 2, qui montre cette cavité remplie d'une quantité prédéterminée 27 de matière polymérisable.

La cavité 10 est formée par une coquille 28 de moulage d'une lentille ophtalmique (ici, un verre de lunettes) et par un joint annulaire 29, ainsi que décrit notamment dans le brevet français 2 449 519, auquel correspond le brevet américain 4,251,474.

La coquille 28 présente globalement la forme d'une coupelle. Le joint 29 présente, en saillie interne, un bourrelet 30 présentant d'un côté une lèvre 31 et de l'autre côté une lèvre 32.

Pour former la cavité 10, la coquille 28 est mise en appui sur un support 33 tandis que le joint 29, dont le diamètre interne correspond au diamètre externe de la coquille 28, est engagé sur cette dernière avec la lèvre 32 qui coopère à étanchéité avec la coquille 28, la face concave de cette dernière étant tournée vers le haut et formant le fond de la cuvette, les parois latérales de cette dernière étant formées par le joint 29.

Après remplissage de la cavité 10 avec la quantité prédéterminée 27 de matière polymérisable, une deuxième coquille de moulage est mise en place dans le joint 29 jusqu'à coopérer à étanchéité avec la lèvre 31. La quantité 27 de liquide déversée dans la cavité 10 est alors disposée entre la coquille 28 et l'autre coquille. Peut alors débuter l'opération de polymérisation de cette quantité 27 de matière, au terme de laquelle le moule formé par la coquille 28, par le joint 29 et par l'autre coquille contiendra une lentille ophtalmique qu'il n'y aura plus qu'à démouler par enlèvement du joint 29 et par décollement des coquilles.

On va maintenant décrire à l'appui des figures 3 à 7 un exemple de mise en oeuvre de la vanne 2.

Dans cet exemple, la vanne 2 comporte un corps principal 35 dans lequel est ménagé un conduit 36 dont les extrémités forment respectivement l'orifice d'entrée 7 et l'orifice de sortie 8 (non visibles sur les figures 3 à 7).

Sur le corps 35 est fixée une buse 37 dont l'extrémité libre forme l'orifice 9 d'éjection de matière polymérisable.

Dans le corps 35 et dans la buse 37 est ménagé un canal 38 débouchant à une extrémité par l'orifice 9 tandis qu'à l'autre extrémité le canal 38 est en communication avec le canal 36, ici par un orifice de transfert 36' situé dans la paroi latérale du canal 36.

Dans un alésage du corps 35 est disposé le cylindre 17 dans lequel est reçu le piston 18.

Un canal 39 est ménagé dans le corps 35 et dans le cylindre 17 entre l'extrémité de ce dernier opposée au piston 18 et le canal 38.

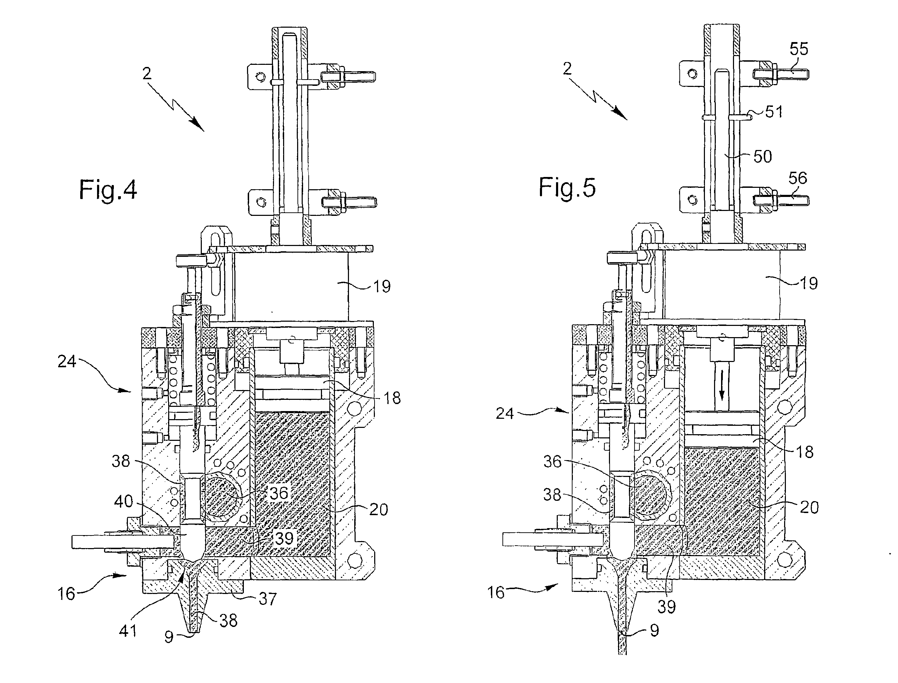

Un doigt de dispense 40 est disposé dans le canal 38. Le doigt 40 y est mobile à coulissement entre la position illustrée sur les figures 3, 6 et 7 et la position illustrée sur les figures 4 et 5.

Dans la position illustrée sur les figures 3, 6 et 7 le doigt 40 isole le canal 39 de la portion du canal 38 ménagée dans la buse 37 tandis qu'il laisse le canal 39 communiquer avec la portion du canal 38 située entre le canal 36 et le canal 39. Cela correspond à la position 21 du distributeur schématisé par 16 sur la figure 1.

Dans la position illustrée sur les figures 4 et 5, le canal 39 est en communication avec la portion du canal 38 située dans la buse 37 tandis que le canal 39 est isolé de la portion du canal 38 située entre le canal 36 et le canal 39. Cela correspond à la position 23 illustrée schématiquement sur la figure 1.

Lorsque le doigt 40 est dans une position intermédiaire entre la position montrée sur les figures 3, 6 et 7 et la position montrée sur les figures 4 et 5, le canal 39 communique avec la totalité du canal 38. On est alors dans la position 22 schématisée sur la figure 1.

Pour permettre au doigt 40 d'isoler du canal 39 la portion du canal 38 située dans la buse 37, celle-ci présent un siège 41 contre lequel l'extrémité libre du doigt 40 est adapté à venir en butée pour opérer l'obturation, ainsi que montré sur les figures 3, 6 et 7.

L'isolement entre le canal 39 et la portion du canal 38 située entre le canal 36 et le canal 39 se fait par la coopération de la paroi latérale de cette portion du canal 38 et de la paroi latérale du doigt 40, laquelle coopération est à étanchéité, ainsi que montré sur les figures 4 et 5.

Le doigt 40 est situé à une extrémité d'une tige 42 dont l'autre extrémité forme un piston 43 mobile dans un alésage 44 du corps 35 fermé par un chapeau 45. La chambre que constitue la portion de l'alésage 44 située entre le piston 43 et le chapeau 45 communique avec l'atmosphère grâce à un orifice latéral 46. Dans cette chambre est disposé un ressort de rappel 47 sollicitant le piston 43 dans le sens où le doigt 40 vient en butée contre le siège 41.

L'autre chambre, située entre le fond de l'alésage 44 et le piston 43, est mise en liaison avec la conduite pneumatique 26 grâce à un orifice latéral 48. Pour fixer la course du piston 43, et donc du doigt 40, une tige 49 dont la paroi latérale est filetée, saille dans l'alésage 44 à partir du chapeau 45 afin de fournir à son extrémité une butée d'arrêt pour le piston 43 (voir les figures 4 et 5).

Le filetage latéral de la tige 49, qui coopère avec un taraudage du chapeau 45, permet de régler la position du doigt 49 dans l'alésage 44.

On voit qu'au repos (conduite 26, connectée à l'orifice 48, mise à l'atmosphère), le ressort 47 sollicite le piston 43 vers la position où le doigt 40 est en butée contre le siège 41 tandis que quand la conduite 26 est mise sous pression, le piston 43 vient en butée contre la tige 49.

Le piston 18, disposé dans le cylindre 17, est fixé au bout d'une tige 50 passant au travers d'un ensemble électromécanique pas-à-pas 19 qui sert au pilotage de la position du piston 18.

La tige 50 présente sur sa paroi latérale un filetage coopérant avec un écrou entraîné par le moteur électrique de l'ensemble 19 de sorte qu'il existe un rapport fixe prédéterminé entre la rotation du moteur de l'ensemble 19 et le déplacement à coulissement du piston 18.

Pour immobiliser en rotation la tige 50, celle-ci présente une goupille transversale 51 qui passe au travers de deux lumières allongées opposées 52 et 53 du tube 54 entourant la portion de la tige 50 située à l'opposé du piston 18. Sur le tube 54 sont montés des capteurs de position 55 et 56 détectant la présence de la goupille 51. Lorsque la goupille 51 est en regard du capteur 55, qui est celui le plus éloigné du moteur 19, ainsi que montré sur les figures 3 et 4, le volume de la chambre de dosage 20 est à son maximum tandis que quand la goupille 51 est en regard du capteur 56, qui est celui le plus proche du moteur 19, le volume de la chambre de dosage 2 est à son minimum.

On observera que le canal 39 comporte, en outre de sa portion s'étendant entre le canal 38 et la chambre 20, une autre portion se trouvant à l'opposé et dans le prolongement de la première portion du canal 39, laquelle autre portion est obturée par un bouchon 57 au centre duquel se trouve un capteur 58 de la température de la matière polymérisable à l'intérieur de la vanne 2.

Pour réguler en température les différentes zones contenant de la matière polymérisable (chambre 20 et canaux 36, 38 et 39), le corps 35 présente des canaux 59 de circulation de liquide thermique.

Cette régulation en température est favorable à la prévention des défauts dus à l'effet de gommage et à l'effet de sirop.

Par ailleurs, le choix approprié des vitesses de circulation de la matière polymérisable permet d'éviter les phénomènes de bullage.

Comme indiqué ci-dessus, la configuration illustrée sur la figure 3 correspond à la configuration de repos de la vanne 2.

Lorsqu'à partir de cette position, l'on effectue, avec l'unité 3, la mise sous pression de la conduite pneumatique 26, le piston 43 vient en butée contre le bout de la tige 49, ainsi que montré sur la figure 4 (cela correspond à la position 23).

En gardant cette position pour le doigt 40, on agit, avec l'unité 3, sur le moteur de l'ensemble pas-à-pas 19 pour commander le déplacement du piston 18 dans le sens de la diminution du volume de la chambre 20. La matière polymérisable s'écoule alors hors de l'orifice d'éjection 9, ainsi que montré sur la figure 5.

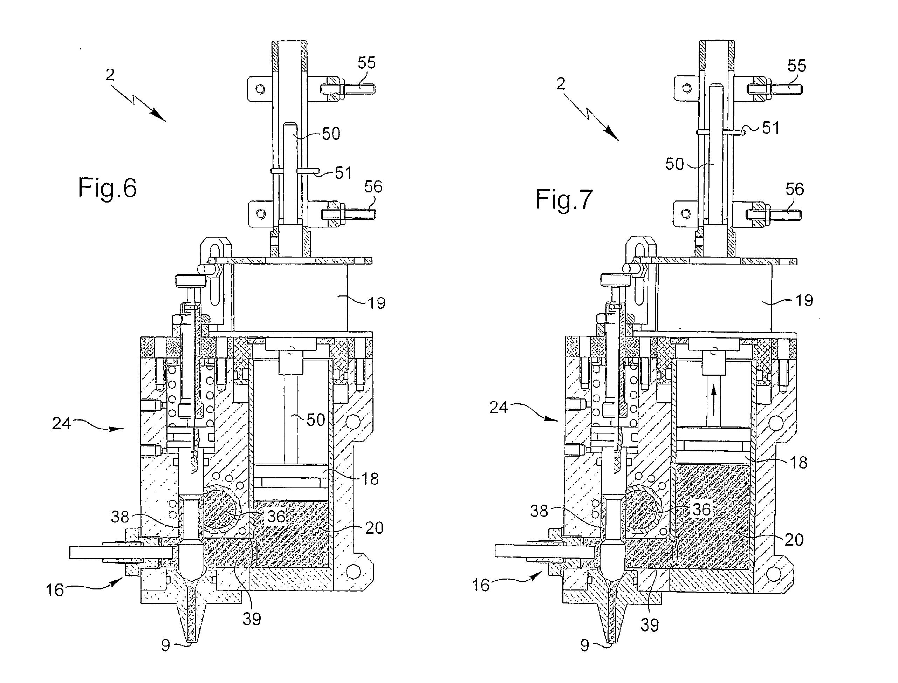

Lorsque le piston 18 a été déplacé de la quantité voulue pour que le volume requis ait été déversé au travers de l'orifice 9, on ramène, avec l'unité 3, la conduite 26 à l'atmosphère, de sorte que, sous l'effet du ressort 47, le doigt 40 vient en butée contre le siège 41. On est alors dans la position illustrée sur les figures 6 et 1.

Pour revenir à la position de repos, on agit sur le moteur de l'ensemble 19 grâce à l'unité 3 pour ramener le piston 18 à sa position initiale, ainsi qu'illustré sur la figure 7.

Dans une variante non représentée, la vanne 2 est mise en oeuvre avec un agencement différent de celui montré sur les figures 3 à 7, en particulier en prévoyant que le siège 41 fasse partir d'un élément autre que la buse 37 et en prévoyant que le vérin de commande du piston 40 est à double effet et à ressort de sécurité, plutôt que d'être à simple effet ; et/ou la cavité remplie est différente de la cavité 10 montrée sur les figures 1 et 2.

Plus généralement, on rappelle que l'invention ne se limite pas aux exemples décrits et représentés.

## Revendications

1. Vanne convenant au remplissage, avec une matière polymérisable, d'une cavité de moulage (10) d'une lentille optique, en particulier une lentille ophtalmique, laquelle vanne (2) comporte un orifice (7) d'entrée de matière, un orifice (8) de sortie de matière et un orifice (9) d'éjection de matière dans ladite cavité (10) ainsi qu'un distributeur (16) pour mettre en communication ou isoler les uns des autres l'orifice (7) d'entrée de matière, l'orifice (8) de sortie de matière et l'orifice (9) d'éjection ; vanne **caractérisée en ce que** :
- elle comporte une chambre de dosage (20) connectée audit distributeur (16), un piston mobile (18) dont la position fixe le volume de ladite chambre de dosage (20), un organe (19) de pilotage de la position dudit piston mobile (18) et un organe (24) de pilotage de la position dudit distributeur (16) ;
- l'orifice d'entrée (7) et l'orifice de sortie (8) sont en communication permanente ; et
- ledit distributeur (16) présente une première position (21) dans laquelle ledit orifice (7) d'entrée de matière et ledit orifice (8) de sortie de matière sont en communication avec ladite chambre de dosage (20) tandis que ledit orifice (9) d'éjection est isolé tant dudit orifice (7) d'entrée de matière et dudit orifice (8) de sortie de matière que de la chambre de dosage (20), et présente une deuxième position (23) dans laquelle ledit orifice (7) d'entrée de matière et ledit orifice (8) de sortie de matière sont isolés tant de la chambre de dosage (20) que de l'orifice d'éjection (9) tandis que la chambre de dosage (20) et l'orifice d'éjection (9) sont en communication l'un avec l'autre.

2. Vanne selon la revendication 1, **caractérisée en ce que** ledit distributeur (16) présente une troisième position (22) dans laquelle ledit orifice (7) d'entrée de matière, ledit orifice (8) de sortie de matière, la chambre de dosage (20) et l'orifice d'éjection (9) sont tous en communication les uns avec les autres.

3. Vanne selon la revendication 2, **caractérisée en ce que** ladite troisième position (22) est une position intermédiaire que prend ledit distributeur (16) lorsqu'il passe de la première position (21) à la deuxième position (23) et inversement.

4. Vanne selon l'une quelconque des revendications 1 à 3, **caractérisée en ce qu'**elle comporte un premier canal (36) dont une première extrémité forme ledit orifice d'entrée (7) et dont une deuxième extrémité forme ledit orifice de sortie (8), un deuxième canal (38) débouchant à une première extrémité par ledit orifice, d'éjection (9) tandis qu'à une deuxième extrémité ledit deuxième canal (38) est en communication avec ledit premier canal (36) par un orifice de transfert (36'), un troisième canal (39) dont une première extrémité débouche dans ledit deuxième canal (38) et dont une deuxième extrémité débouche dans ladite chambre de dosage (20) à une extrémité opposée audit piston (18), et un doigt de dispense (40) mobile à coulissement dans ledit deuxième canal (38).

5. Vanne selon la revendication 4, **caractérisée en ce que** ledit doigt (40) est adapté à coopérer avec la paroi latérale dudit deuxième canal (38) pour admettre une première position dans laquelle il est en butée contre un siège (41) en isolant ledit troisième canal (39) d'une première portion dudit deuxième canal (38) située entre ledit siège (41) et ledit orifice d'éjection (9) tandis qu'il laisse ledit troisième canal (39) communiquer avec ledit premier canal (36) par l'intermédiaire d'une deuxième portion dudit deuxième canal (38) et pour admettre une deuxième position dans laquelle il isole ledit troisième canal (39) de ladite deuxième portion du deuxième canal (38) tandis qu'il laisse ledit troisième canal (39) communiquer avec ladite première portion du deuxième canal (38).

6. Vanne selon l'une quelconque des revendications 1 à 5, **caractérisée en ce que** ledit organe (24) de pilotage du distributeur (16) est pneumatique.

7. Vanne selon la revendication 6, **caractérisée en ce que** ledit organe (24) de pilotage dudit distributeur (16) comporte une tige (42) présentant à une première extrémité un doigt de dispense (40) et présentant à une deuxième extrémité un piston (43) faisant partie d'un vérin pneumatique.

8. Vanne selon la revendication 7, **caractérisée en ce qu'**elle comporte un organe (49) de butée à position réglable pour ledit piston (43).

9. Vanne selon l'une quelconque des revendications 1 à 8, **caractérisée en ce que** ledit organe (19) de pilotage de la position dudit piston (18) mobile dans la chambre de dosage (20) comporte un ensemble électromécanique pas-à-pas (19).

10. Vanne selon la revendication 9, **caractérisée en ce qu'**elle comporte une tige (50) passant au travers dudit ensemble électromécanique pas-à-pas (19) à laquelle est fixée, à une première extrémité, ledit piston mobile (18).

11. Vanne selon la revendication 10, **caractérisée en ce qu'**elle comporte au moins un capteur (55, 56) de la position de ladite tige (50).

12. Vanne selon la revendication 11, **caractérisée en ce qu'**elle comporte deux capteurs de position de ladite tige (50), respectivement un capteur de détection d'une fin de course où ledit piston mobile (18) délimite un volume maximum pour ladite chambre de dosage (20) et une deuxième position de fin de course où ledit piston mobile délimite un volume minimum pour ladite chambre de dosage (20).

13. Vanne selon l'une quelconque des revendications 1 à 12, **caractérisée en ce qu'**elle comporte des canaux (59) de circulation de liquide de régulation thermique.

14. Dispositif d'alimentation convenant au remplissage, avec une matière polymérisable, d'une cavité de moulage (10) d'une lentille optique, en particulier une lentille ophtalmique, comportant une vanne (2) selon l'une quelconque des revendications 1 à 13, une unité (3) de commande de l'organe de pilotage (24) du distributeur (16) et de l'organe de pilotage (19) du piston mobile (18), ainsi qu'une source (5, 6) de matière polymérisable comportant un réservoir (5) de matière polymérisable et une pompe (6) de circulation continue, l'orifice (7) d'entrée de matière de la vanne (2) étant relié à l'orifice (11) de refoulement de la pompe, l'orifice (8) de sortie de matière de la vanne (2) étant relié à l'orifice (12) de retour du réservoir (5) tandis que l'orifice de départ (13) du réservoir est relié à l'orifice d'aspiration de la pompe.

15. Dispositif selon la revendication 14, **caractérisé en ce que** ladite unité de commande (3) est adaptée, à partir d'une position de repos de ladite vanne (2) dans laquelle ledit distributeur (16) est dans ladite première position (21) et dans laquelle ladite chambre de dosage (20) présente un volume prédéterminé et est rempli en matière polymérisable :
- à agir sur ledit organe (24) de pilotage du distributeur (16) pour le faire passer dans ladite deuxième position (23) ; puis
- à agir sur ledit organe (19) de pilotage de la position dudit piston mobile (18) pour déplacer ledit piston d'une distance prédéterminée dans le sens de la diminution du volume de ladite chambre de dosage ; puis
- à agir sur ledit organe (24) de pilotage du distributeur (16) pour le faire passer dans ladite première position (21) ; puis
- à agir sur ledit organe (19) de pilotage de la position dudit piston mobile (18) pour déplacer celui-ci dans le sens de l'augmentation de volume de ladite chambre de dosage (20) jusqu'à faire prendre à cette chambre ledit volume prédéterminé.

16. Dispositif selon la revendication 15, **caractérisé en ce que** ledit volume prédéterminé que présente ladite chambre de dosage (20) dans ladite position de repos est son volume maximum.

## Claims

1. Valve suitable for filling, with a polymerisable material, a cavity (10) for moulding an optical, lens, especially an ophthalmic lens, which valve (2) includes a material inlet orifice (7), a material outlet orifice (8), an orifice (9) for ejecting material into said cavity (10), and a distributor (16) for putting into communication with each other or isolating from each other the material inlet orifice (7), the material outlet orifice (8) and the ejection orifice (9), which valve is **characterised in that**:
- it includes a dosing chamber (20) connected to said distributor (16), a mobile piston (18) whose position fixes the volume of said dosing chamber (20), means (19) for controlling the position of said mobile piston (18), and means (24) for controlling the position of said distributor (16);
- the inlet orifice (7) and the outlet orifice (8) are in permanent communication; and
- said distributor (16) has a first position (21) in which said material inlet orifice (7) and said material outlet orifice (8) are in communication with said dosing chamber (20) and in which said ejection orifice (9) is isolated from said material inlet orifice (7), from said material outlet orifice (8) and from the dosing chamber (20), and has a second position (23) in which said material inlet orifice (7) and said material outlet orifice (8) are isolated both from the dosing chamber (20) and from the ejection orifice (9) and in which the dosing chamber (20) and the ejection orifice (9) are in communication with each other.

2. Valve according to claim 1, **characterised in that** said distributor (16) has a third position (22) in which said material inlet orifice (7), said material outlet orifice (8), the dosing chamber (20) and the ejection orifice (9) are all in communication with each other.

3. Valve according to claim 2, **characterised in that** said third position (22) is an intermediate position that said distributor (16) assumes when it moves from the first position (21) to the second position (23) and vice-versa.

4. Valve according to any one of claims 1 to 3, **characterised in that** it includes a first channel (36) whereof a first end forms said inlet orifice (7) and a second end forms said outlet orifice (8), a second channel (38) discharging at a first end via said ejection orifice (9) and communicating at a second end with said first channel (36) via a transfer orifice (36'), a third channel (39) whereof a first end discharges into said second channel (38) and a second end discharges into said dosing chamber (20) at an end opposite said piston (18), and a dispensing finger (40) slidably mobile in said second channel (38).

5. Valve according to claim 4, **characterised in that** said finger (40) is adapted to cooperate with a lateral wall of said second channel (38) to assume a first position, in which it abuts against a seat (41), thereby isolating said third channel (39) from a first portion of said second channel (38) situated between said seat (41) and said ejection orifice (9), and in which it allows said third channel (39) to communicate with said first channel (36) via a second portion of said second channel (38), and to assume a second position, in which it isolates said third channel (39) from said second portion of the second channel (38) and allows said third channel (39) to communicate with said first portion of the second channel (38).

6. Valve according to any one of claims 1 to 5, **characterised in that** said means (24) for controlling the distributor (16) are pneumatic means.

7. Valve according to claim 6, **characterised in that** said means (24) for controlling said distributor (16) includes a rod (42) having a dispensing finger (40) at a first end and a piston (43) forming part of a pneumatic piston-and-cylinder at a second end.

8. Valve according to claim 7, **characterised in that** it includes an adjustable position abutment member (49) for said piston (43).

9. Valve according to any one of claims 1 to 8, **characterised in that** said member (19) for controlling the position of said piston (18) mobile in the dosing chamber (20) includes an electromechanical stepper system (19).

10. Valve according to claim 9, **characterised in that** it includes a rod (50) passing through said electromechanical stepper system (19) and to a first end whereof said mobile piston (18) is fixed.

11. Valve according to claim 10, **characterised in that** it includes at least one sensor (55, 56) for sensing the position of said rod (50).

12. Valve according to claim 11, **characterised in that** it includes two sensors for sensing the position of said rod (50), respectively a sensor for sensing an end of stroke position in which said mobile piston (18) delimits a maximum volume of said dosing chamber (20) and a second end of stroke position in which said mobile piston delimits a minimum volume of said dosing chamber (20).

13. Valve according to any one of claims 1 to 12, **characterised in that** it includes channels (59) for circulating thermal regulation liquid.

14. Supplying device suitable for filling with a polymerisable material a cavity (10) for moulding an optical lens, especially an ophthalmic lens, including a valve (2) according to any one of claims 1 to 13, a unit (3) for controlling the control means (24) of the distributor (16) and the control means (19) of the mobile piston (18), and a supply (5, 6) of polymerisable material including a tank (5) of polymerisable material and a continuous circulation pump (6), the material inlet orifice (7) of the valve (2) being connected to a discharge orifice (11) of the pump, a material outlet orifice (8) of the valve (2) being connected to a return orifice (12) of the tank (5), and an outlet orifice (13) of the tank being connected to a suction orifice of the pump.

15. Device according to claim 14, **characterised in that** said control unit (3) is adapted, starting from a rest position of said valve (2) in which said distributor (16) is in said first position (21) and in which said dosing chamber (20) has a predetermined volume and is filled with polymerisable material:
- operating on said means (24) for controlling the distributor (16) to move it to its second position (23); then
- operating on said means (19) for controlling the position of said mobile piston (18) to move said piston a predetermined distance in the direction that reduces the volume of said dosing chamber; then
- operating on said means (24) for controlling the distributor (16) to move it into said first position (21); and
- operating on said means (19) for controlling the position of said mobile piston (18) to move the latter in the direction that increases the volume of said dosing chamber (20) until that chamber assumes said predetermined volume.

16. Device according to claim 15, **characterised in that** said predetermined volume of said dosing chamber (20) in said rest position is its maximum volume.

## Patentansprüche

1. Ventil, geeignet zum Befüllen eines Gußhohlraumes (10) einer optischen Linse, insbesondere einer ophthalmischen Linse mit einem polymerisierbaren Material, wobei das Ventil (2) eine Materialeintrittsöffnung (7), eine Materialaustrittsöffnung (8) und eine Materialspritzöffnung (9) in den Hohlraum (10) enthält, sowie einen Verteiler (16) zum jeweils miteinander in Verbindung setzen oder isolieren von der Materialeintrittsöffnung (7), der Materialaustrittsöffnung (8) und der Materialspritzöffnung (9), wobei das Ventil **dadurch gekennzeichnet ist, dass**
- sie eine mit dem Verteiler (16) verbundene Dosierkammer (20) enthält, einen beweglichen Kolben (18), dessen Position das Volumen der Dosierkammer (20) festlegt, ein Steuerorgan (19) bezüglich der Position des beweglichen Kolbens (18), sowie ein Steuerorgan (24) der Position des Verteilers (16);
- die Eintrittsöffnung (7) und die Austrittsöffnung (8) in permanenter Verbindung stehen; und
- der Verteiler (16) über eine erste Position (21) verfügt, in der die Materialeintrittsöffnung (7) und die Materialaustrittsöffnung (8) mit der Dosierkammer (20) in Verbindung stehen, wohingegen die Spritzöffnung sowohl von der Materialeintrittsöffnung (7) und der Materialaustrittsöffnung (8) als auch der Dosierkammer (20) isoliert vorliegt, sowie über eine zweite Position (23), in welcher die Materialeintrittsöffnung (7) und die Materialaustrittsöffnung (8) von sowohl der Dosierkammer (20) als auch der Spritzöffnung (9) isoliert vorliegen, wohingegen die Dosierkammer und die Spritzöffnung (9) miteinander in Verbindung stehen.

2. Ventil nach Anspruch 1, **dadurch gekennzeichnet, dass** der Verteiler (16) über eine dritte Position (22) verfügt, in der die Materialeintrittsöffnung (7), die Materialaustrittsöffnung (8), die Dosierkammer (20) und die Spritzöffnung (9) allesamt miteinander in Verbindung stehen.

3. Ventil nach Anspruch 2, **dadurch gekennzeichnet, dass** die dritte Position (22) eine zwischengelagerte Position ist, die der Verteiler (16) einnimmt, wenn er von der ersten Position (21) zur zweiten Position (23) und umgekehrt übergeht.

4. Ventil nach einem der Ansprüche 1 bis 3, **dadurch gekennzeichnet, dass** es einen ersten Kanal (36) enthält, dessen erstes Ende die Eintrittsöffnung (7) bildet und dessen zweites Ende die Austrittsöffnung (8) bildet, einen zweiten Kanal (38), mündend an einem ersten Ende durch die Spritzöffnung (9), wohingegen an einem zweiten Ende der zweite Kanal (38) mit dem ersten Kanal (36) mittels einer Transferöffnung (36') in Verbindung steht, einen dritten Kanal (39), dessen erstes Ende in dem zweiten Kanal (38) mündet, und von dem ein zweites Ende in der Dossierkammer (20) mündet, und zwar bei einem Ende gegenüberliegend dem Kolben (18), und einen Ausgabefinger (40), gleitend beweglich in dem zweiten Kanal (38).

5. Ventil nach Anspruch 4, **dadurch gekennzeichnet, dass** der Finger (40) ausgelegt ist zur Wechselwirkung mit einer Lateralwandung des zweiten Kanales (38) um eine erste Position zu ermöglichen, in welcher er in Anlage vorliegt gegen einen Sitz (41), wobei der dritte Kanal (39) von einem ersten Abschnitt des zweiten Kanales (38), befindlich zwischen dem Sitz (41) und der Spritzöffnung (9) isoliert ist/wird, wohingegen er den dritten Kanal (39) in Verbindung lässt mit dem ersten Kanal (36) vermittels eines zweiten Abschnittes des zweiten Kanales (38), und um eine zweite Position zur ermöglichen, in welcher er den dritten Kanal (39) von dem zweiten Abschnitt des zweiten Kanales (38) isoliert, wohingegen er den dritten Kanal (39) in Verbindung lässt mit dem ersten Abschnitt des zweiten Kanales (38).

6. Ventil nach einem der Ansprüche 1 bis 5, **dadurch gekennzeichnet, dass** das Steuerorgan (24) des Verteilers (16) pneumatisch ausgebildet ist.

7. Ventil nach Anspruch 6, **dadurch gekennzeichnet, dass** das Steuerorgan (24) des Verteilers (16) einen Schaft (42) enthält, aufweisend an einem ersten Ende einen Ausgabefinger (40) und aufweisend an einem zweiten Ende einen Kolben (43) der Bestandteil eines pneumatischen Nonius ist.

8. Ventil nach Anspruch 7, **dadurch gekennzeichnet, dass** es ein Anschlagorgan (49) enthält, mit einstellbarer Position für den Kolben (43).

9. Ventil nach einem der Ansprüche 1 bis 8, **dadurch gekennzeichnet, dass** das Steuerorgan (19) der Position des Kolbens (18), beweglich in der Dossierkammer (20), eine elektromechanische Schrittanordnung (19) enthält.

10. Ventil nach Anspruch 9, **dadurch gekennzeichnet, dass** es einen Schaft (50) enthält, verlaufend durch die elektromagnetische Schritt-für-Schritt-Anordnung bzw. die elektromagnetische Schrittanordnung (19), an welchem an einem ersten Ende der bewegliche Kolben (18) festgelegt oder befestigt ist.

11. Ventil nach Anspruch 10, **dadurch gekennzeichnet, dass** es zumindest einen Sensor (55, 56) der Position des Schaftes (50) enthält.

12. Ventil nach Anspruch 11, **dadurch gekennzeichnet, dass** es zwei Positionssensoren für den Schaft (50) enthält, jeweils einen Sensor zur Erfassung eines Bewegungsendes, bei welchem der bewegliche Kolben (18) ein maximales Volumen für die Dossierkammer (20) begrenzt und eine zweite Bewegungsendposition, bei welcher der bewegliche Kolben ein minimales Volumen für die Dossierkammer (20) begrenzt.

13. Ventil nach einem der Ansprüche 1 bis 12, **dadurch gekennzeichnet, dass** es Kanäle (59) zur thermisch regelnden Fluidzirkulation enthält.

14. Versorgungsvorrichtung, geeignet zur Befüllung eines Form- oder Gußholhraumes (10) einer optischen Linse, insbesondere einer ophthalmischen Linse mit einem polymerisierbaren Material, umfassend ein Ventil (2) gemäß einem der Ansprüche 1 bis 13, eine Einheit (3) zum Befehligen des Steuerorganes (24) des Verteilers (16) und des Steuerorganes (19) des beweglichen Kolbens (18), sowie eine Quelle (5, 6) an polymerisierbarem Material, enthaltend ein Reservoir (5) für polymerisierbares Material und eine Pumpe (6) zur kontinuierlichen Zirkulation, wobei die Materialeintrittsöffnung (7) des Ventiles (2) mit der Öffnung (11) des Ausstoßes der Pumpe verbunden ist, die Materialaustrittsöffnung (8) des Ventiles (2) mit der Öffnung (12) zur Rückkehr zum Reservoir (5) verbunden ist" wohingegen die Abfuhröffnung (13) des Reservoires mit der Ansaugöffnung der Pumpe verbunden ist.

15. Vorrichtung nach Anspruch 14, **dadurch gekennzeichnet, dass** die Befehlseinheit (3) ausgelegt ist, ausgehend von einer Ruheposition des Ventiles (2), in welcher der Verteiler (16) in der ersten Position (21) vorliegt und in welcher die Dossierkammer (20) ein vorbestimmtes Volumen aufweist und mit polymerisierbarem Material gefüllt ist:
- Einzuwirken auf das Steuerorgan (24) des Verteilers (16) um diesen Überzuführen in die zweite Position (23); anschließend
- Einzuwirken auf das Steuerorgan (19) der Position des beweglichen Kolbens (18), um den Kolben zu versetzen um einen vorbestimmten Abstand bzw. eine vorbestimmte Entfernung in der Richtung der Reduzierung des Volumens der Dossierkammer; anschließend
- Einzuwirken auf das Steuerorgan (24) des Verteilers (16), um ihn überzuführen in die erste Position (21); anschließend
- Einzuwirken auf das Steuerorgan (19) der Position und des beweglichen Kolbens (18) um diesen zu versetzen in einer Richtung der Erhöhung des Volumens der Dossierkammer (20) bis die Kammer das vorbestimmte Volumen angenommen hat.

16. Vorrichtung nach Anspruch 15, **dadurch gekennzeichnet, dass** das vorbestimmte Volumen, welches die Dossierkammer (20) in der Ruheposition hat dessen Maximalvolumen ist.
